# FASCICULE DE BREVET EUROPEEN

(11) **EP 1 190 837 B1**
(45) Date de publication et mention de la délivrance du brevet: **01.12.2004**
(21) Numéro de dépôt: 01203456.7
(22) Date de dépôt: 12.09.2001
(51) Int. Cl.: B29C 65/02, B60K 15/03

(54) **Procédé pour la fabrication d'un corps creux multicouche et moule de compression-soufflage**
Verfahren zur Herstellung eines mehrschichtigen Hohlkörpers und Blasformwerkzeug mit Abquetschrändern
Manufacturing method for a multilayer hollow body and blow mould with compression borders

(30) Priorité: 14.09.2000 FR 0011835
(43) Date de publication de la demande: 27.03.2002
(73) Titulaire: Inergy Automotive Systems Research (SA), 1120 Bruxelles (BE)
(72) Inventeur: Van Schaftingen, Jules-Joseph, 1300 Wavre (BE)
(74) Mandataire: Decamps, Alain René François

(56) Documents cités:
- FR-A- 2 027 012
- JP-A- 63 178 931
- LU-A- 86 632
- US-A- 3 160 999
- US-A- 3 600 248
- PATENT ABSTRACTS OF JAPAN vol. 017, no. 288 (M-1423), 3 juin 1993 (1993-06-03) -& JP 05 016938 A (KURATA:KK), 26 janvier 1993 (1993-01-26)
- PATENT ABSTRACTS OF JAPAN vol. 014, no. 305 (M-0992), 29 juin 1990 (1990-06-29) -& JP 02 098542 A (KURATA:KK), 10 avril 1990 (1990-04-10)

## Description

La présente invention concerne un corps creux en matière plastique de structure polymérique multicouche.

Les corps creux en matière plastique de structure polymérique multicouche ont été développés pour répondre à des besoins d'utilisation qui exigent des propriétés ne pouvant être conférées par une seule matière thermoplastique. On a notamment fait appel à cette technique lorsqu'il s'est agit de fabriquer des corps creux en matière plastique qui présentent à la fois une rigidité élevée à température ordinaire et une bonne imperméabilité vis-à-vis de liquides et de gaz qu'ils sont destinés à contenir. Dans ce cas, la fonction d'imperméabilisation est généralement conférée par une couche interne à la structure, de faible épaisseur et de faible résistance mécanique, qui est réalisée en un matériau se comportant comme une barrière vis-à-vis des liquides et des gaz contenus dans le corps creux.

Une technique de réalisation de corps creux en matière plastique de structure polymérique multicouche consiste actuellement à assembler deux éléments de structure multicouche semblable, ou plus, par soudage.

On assiste par ailleurs à une diminution importante des quantités de vapeur et de liquide admissibles qui s'échappent dans l'environnement des récipients contenant des matières organiques. Dans le domaine des réservoirs à carburant, de nouvelles normes imposant des limites extrêmement faibles de pertes admissibles entreront très prochainement en vigueur.

Dans les corps creux fabriqués comme décrit plus haut par assemblage d'éléments multicouches soudés, la zone des plans de soudure présente une imperméabilité affaiblie, étant donné l'écrasement de la structure multicouche dans le plan de soudure, ce qui provoque habituellement un repli des couches d'un élément sur celle de l'élément soudé et le soudage de la couche interne de chaque élément avec celle de l'autre élément. Il en résulte généralement une discontinuité dans la couche barrière de la structure du corps creux produit, donnant lieu de ce fait à un chemin préférentiel pour les fuites de vapeur et de liquide.

On connaît la demande de brevet japonais N° JA-63/178931 qui décrit des plans de joint résultant de l'assemblage de structures multicouches dans lesquels les extrémités des couches barrière se rejoignent en un point à l'intérieur du bourrelet de soudure.

Le document PATENT ABSTRACTS OF JAPAN vol.017 n°288 (M-1423) et la demande de brevet japonais JP 05 016938 A divulguent un réservoir en résine synthétique qui comporte deux parties dont les contours périphériques ont été soudés ensemble. Les parois de chaque partie comprennent une couche interne en matière synthétique, un film (qui joue le rôle de couche barrière) pour empêcher la perméation de substances qui traversent la matière synthétique et une couche externe, également en résine synthétique.

La demande de brevet français FR-A-2 027 012 divulgue un procédé pour souder des matières stratifiées comprenant une couche de contact en matière soudable à chaud et une couche extérieure en une matière possédant des propriétés de résistance mécanique. Les couches soudables sont pressées l'une contre l'autre au moyen de mâchoires profilées qui forcent les couches de contact à se séparer latéralement. Il y a donc discontinuité de la couche de contact.

L'imperméabilité obtenue avec de tels joints n'est cependant pas encore suffisante pour parvenir à respecter les limites très basses imposées par les nouvelles normes, étant donné les difficultés à maintenir le contact entre l'extrémité des couches barrière de chaque élément sur toute la longueur du cordon de soudure.

L'invention a pour but de fournir un corps creux qui présente un niveau de perméabilité aux plans de soudure sensiblement plus faible encore que celui obtenu avec les procédés connus basés sur la recherche du contact entre l'extrémité des couches barrière et qui puisse rencontrer les exigences imposées par les nouvelles normes environnementales.

A cet effet l'invention concerne un corps creux en matière plastique de structure polymérique multicouche comprenant au moins une couche barrière interne imperméable aux gaz et aux liquides, dans lequel au moins deux éléments de structure semblable sont soudés l'un à l'autre, caractérisé en ce que les éléments soudés se prolongent vers l'extérieur du corps creux par un appendice comprenant les couches barrière.

Par corps creux, on désigne toute structure dont la surface présente au moins une partie vide ou concave. De préférence le corps creux désigne ici une structure fermée destinée à contenir un liquide et/ou un gaz. Particulièrement préférés sont les cuves et les réservoirs. Le corps creux peut présenter des orifices percés dans son enveloppe et permettant la communication avec l'environnement extérieur. Généralement, le corps creux présente au plus 10 orifices. Les tubes sont le plus souvent exclus des corps creux selon l'invention.

Par matière plastique, on désigne toute matière comprenant au moins un polymère. Les polymères thermoplastiques sont préférés. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Les polymères thermoplastiques comprennent aussi les élastomères thermoplastiques, ainsi que leurs mélanges.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut trouver dans le corps creux des polyoléfines, des polyoléfines greffées, des polyesters thermoplastiques, des polycétones, des polyamides et leurs copolymères.

Un polymère souvent présent dans le corps creux est le polyéthylène. D'excellents résultats ont été obtenus avec du polyéthylène haute densité (PEHD).

Un copolymère souvent utilisé est le copolymère éthylène - alcool vinylique (EVOH). Un mélange de polymères ou de copolymères peut aussi être utilisé, de même qu'un mélange de matières polymériques avec des charges inorganiques, organiques et/ou naturelles comme, par exemple, mais non limitativement: le carbone, les sels et autres dérivés inorganiques, les fibres naturelles ou polymériques.

Selon l'invention, la matière plastique du corps creux est de structure polymérique multicouche. De telles structures multicouches sont constituées de couches polymériques empilées et solidaires comprenant au moins un des polymères ou copolymères décrits *supra.* Elles peuvent être obtenues à l'aide d'une tête de coextrusion ou par une technique de recouvrement total ou partiel d'une couche substrat par une ou plusieurs autres couches. Un exemple de la technique de recouvrement est la projection de matière thermoplastique sur la couche substrat par pistolage.

Le corps creux conforme à l'invention comprend au moins une couche barrière. Cette couche se trouve située à l'intérieur de la structure polymérique multicouche et est par conséquent entourée de chaque côté par au moins une couche de matière plastique dont les propriétés barrière sont plus faibles. Le plus souvent, les couches situées de part et d'autre au voisinage d'une couche barrière présentent des propriétés barrière peu significatives.

Par couche barrière, on entend une couche imperméable aux gaz et aux liquides. Elle comprend généralement une résine barrière. Toute résine barrière connue peut être présente dans le corps creux, pour autant qu'elle soit efficace vis-à-vis des fluides susceptibles de se trouver en contact avec ce corps creux, en particulier des hydrocarbures et qu'elle soit compatible avec la technique de fabrication de la structure multicouche.

Parmi les résines possibles, on peut citer, de manière non limitative, les polyamides ou copolyamides et les copolymères statistiques d'éthylène et d'alcool vinylique. Un mélange de différentes résines barrières est aussi possible. De très bons résultats ont étés obtenus avec un corps creux comprenant une résine barrière en copolymère statistique d'éthylène et d'alcool vinylique.

Selon l'invention, le corps creux comprend au moins deux éléments soudés l'un à l'autre. Par le vocable élément, il faut comprendre toute pièce ou toute partie de pièce de structure polymérique multicouche dont la forme présente une surface plane ou une surface dont au moins une partie est concave. De préférence, le corps creux comprend un nombre d'éléments ne dépassant pas 10. Particulièrement préféré est le corps creux qui comprend au plus 5 éléments. Un corps creux à 2 éléments soudés a donné d'excellents résultats.

Selon l'invention, les éléments sont de structure semblable. On entend par là que la structure de chacun des éléments comprend un nombre de couches ne différant pas entre eux de plus de 3 unités et, de préférence, pas de plus de 2 unités et que les natures des polymères intervenant dans les couches qui se correspondent de part et d'autre de la surface de soudure sont compatibles du point de vue chimique et du point de vue de leurs aptitudes à l'assemblage par soudage. On préfère un corps creux dans lequel les éléments ont des structures possédant le même nombre de couches. Particulièrement préféré est le corps creux dont les éléments ont des structures identiques. Dans ce cas, les éléments de structure identiques peuvent provenir de pièces différentes. Alternativement, ils peuvent aussi provenir de parties d'une même pièce. Cette dernière situation se rencontre lorsque les éléments proviennent de parties d'une même paraison en matière plastique de structure multicouche.

Le corps creux conforme à l'invention comprend des éléments soudés, c'est-à-dire assemblés bords à bords et solidarisés par soudage. Les éléments peuvent être soudés sur la totalité de leur périmètre. Des exemples de cette situation sont les corps creux constitués d'éléments distincts soudés, et aussi les corps creux constitués d'une paraison unique pincée et soudée sur l'ensemble de son pourtour. Dans cette situation, les éléments de corps creux selon l'invention sont généralement soudés sur au moins 80 % de leur périmètre. Un autre exemple de tels corps creux sont ceux qui présentent au moins un orifice situé dans le périmètre des éléments soudés. Un corps creux préféré comprend des éléments soudés sur la totalité de leur périmètre

Alternativement, les éléments peuvent aussi n'être soudés que sur une partie peu importante du périmètre du corps creux. Dans le cas d'éléments provenant d'une paraison unique, ces éléments peuvent n'être soudés qu'en deux régions voisines chacune d'une extrémité de la paraison. Dans cette situation, les éléments de corps creux sont généralement soudés sur au moins 5 % de leur périmètre.

Selon l'invention, le corps creux comprend des éléments soudés qui se prolongent vers l'extérieur de ce corps creux. Le prolongement prend naissance au voisinage de la soudure entre deux éléments et s'étend vers l'extérieur sous la forme d'un appendice qui comprend les couches barrière de chaque élément.

Cet appendice fait partie intégrante du corps creux dont il constitue une partie fonctionnelle.

Il peut se présenter sous différentes formes. De préférence, sa base ancrée dans le corps creux est de section plus large que son extrémité. Il se présente souvent sous la forme d'une excroissance dont la base, si on la coupe par un plan perpendiculaire à la surface du corps creux et aux trottoirs de soudage, présente une section triangulaire. Il se termine souvent, du côté extérieur au corps creux, par une lame aplatie comprenant les couches barrière.

La longueur de cet appendice est telle que le chemin pour le traverser entre les couches barrière est suffisamment long que pour réduire à une valeur très basse la quantité de liquide et/ou de gaz qui peut y passer en un temps donné. De préférence, l'appendice a une longueur d'au moins 0,2 mm. Par « longueur » de l'appendice, on désigne la longueur de la ligne d'intersection de la surface d'une face de cet appendice avec un plan perpendiculaire à la surface du corps creux et aux trottoirs de soudage, en un point centré sur la base de l'appendice. De préférence, la longueur de l'appendice est d'au moins 5 mm. Le plus souvent, cette longueur ne dépasse pas 60 mm. La longueur de l'appendice peut ne pas être uniforme en tout point. Un appendice intéressant est ainsi celui qui présente une longueur plus élevée dans certaines régions particulières de la surface du réservoir, en des endroits où n'existe pas de problème d'encombrement imposant le respect d'un gabarit maximum.

Les éléments soudés se prolongent par un appendice sur une partie au moins du pourtour extérieur du corps creux.

De préférence, ces éléments soudés se prolongent par un appendice sur la totalité du pourtour extérieur du corps creux.

En plus des couches barrière de chaque élément, l'appendice peut aussi comprendre, dans le corps creux selon l'invention, au moins une couche polymérique de nature semblable à celle d'une des autres couches présentes dans chaque élément, d'un côté quelconque d'une couche barrière.

Cette couche de nature semblable peut être une couche externe d'un des éléments, intérieure ou extérieure au corps creux. Alternativement cette couche peut aussi être une des couches internes d'un des éléments. De préférence, plusieurs couches de nature semblable à celle d'une des autres couches présentes dans chaque élément se retrouve dans l'appendice. De manière particulièrement préférée, l'appendice comprend, en plus des couches barrière de chaque élément, un nombre pair de couches qui se correspondent deux à deux dans chaque élément, disposées selon la même séquence que dans l'élément d'où elles proviennent. Une variante intéressante de l'appendice comprend toutes les couches de chaque élément.

L'appendice peut être disposé de toutes manières par rapport à la surface extérieure du corps creux. De préférence, il est replié de façon à diminuer l'encombrement du corps creux. Une variante intéressante du corps creux selon l'invention est celle dans laquelle l'appendice est replié contre la surface extérieure du corps creux. Ce repli est situé d'un côté quelconque de la soudure, sur un des éléments quelconque du corps creux.

Selon cette variante, un corps creux possible est le corps creux dont l'appendice est solidarisé à la surface extérieure du corps creux contre laquelle il est replié. Tout type de solidarisation convient. Un exemple de solidarisation ayant donné de bons résultats est le soudage. Dans ce cas, la solidarisation peut être effective sur la totalité du pourtour du corps creux. En variante, elle peut aussi bien n'être effective que sur une partie unique ou multiple de ce pourtour. Dans les parties du pourtour du corps creux où elle est effective, la solidarisation peut aussi être effective sur la totalité de la surface de l'appendice en contact avec le corps creux. Elle peut également, en variante, n'être effective que dans une zone proche de l'extrémité de l'appendice.

Le corps creux selon l'invention est particulièrement bien adapté à constituer un réservoir. Plus particulièrement encore, il convient bien pour contenir un carburant liquide et/ou gazeux.

L'invention concerne aussi un procédé pour la réalisation, selon la technique du moulage par compression, d'un corps creux en matière plastique de structure polymérique multicouche comprenant une couche barrière aux liquides et aux gaz par soudage d'au moins deux éléments, selon lequel :
a) on insère les éléments dans un moule ouvert en plusieurs parties,
b) on pince entre des trottoirs de soudage disposés à la périphérie d'au moins deux parties de moule au moins une partie des extrémités des éléments à assembler de manière à les superposer,
c) on presse les parties de moule les unes contre les autres afin de souder ensemble les éléments en fermant le moule et, dans le même temps,
d) on force l'écoulement d'au moins les couches barrière de la structure de ces éléments dans une fente mince et étendue délimitée par un espace séparant deux parties de moule au voisinage des trottoirs de soudage et dont la section se rétrécit du côté de l'extérieur de la cavité du moule,
e) on continue à presser les parties de moule, de manière à former un appendice qui émerge de la surface du corps creux du côté de l'extérieur de la cavité du moule,
f) on ouvre le moule,
g) on extrait le corps creux ainsi réalisé du moule.

Dans ce procédé, les termes communs ont la même signification que celle donnée *supra* dans la description du corps creux.

Le procédé selon l'invention fait usage d'un moule en plusieurs parties. Ce moule possède l'ensemble des caractéristiques des moules traditionnellement utilisés dans la technique du moulage par compression.

Dans ce procédé, on entend par trottoir de soudage, une zone disposée à la périphérie d'une partie de moule et capable d'emprisonner et de presser l'un sur l'autre les bords correspondants de deux éléments à souder, par coopération avec la zone périphérique correspondante d'une autre partie de moule lorsque l'on rapproche ces parties en refermant le moule.

Selon une variante préférée du procédé selon l'invention, on réalise en outre une mise en forme des éléments à l'intérieur du moule. Une méthode de choix pour effectuer cette mise en forme consiste à injecter un fluide de soufflage dans le moule, de manière à appliquer les éléments contre les parois de ce dernier. Tout fluide gazeux ou liquide convient, pourvu qu'il soit compatible avec les éléments à souder ainsi qu'avec le matériau dont est constitué le moule. L'air sous pression a donné de bons résultats.

Selon le procédé conforme à l'invention, y compris dans sa variante décrite ci-dessus, on peut en outre, après ouverture du moule en fin d'assemblage, replier l'appendice contre la surface du corps creux. Cette opération peut se faire directement dans le moule ouvert, le corps creux reposant encore dans une partie de moule. Il peut aussi s'effectuer alors que le corps creux a été complètement extrait de toutes les parties du moule.

On peut également solidariser l'appendice à la surface extérieure du corps creux, après l'avoir replié contre cette surface. Une méthode de solidarisation ayant donné de bons résultats est le soudage de l'appendice sur la surface extérieure du corps creux.

La longueur de l'appendice peut être laissée telle qu'obtenue de fabrication. Elle peut aussi être normalisée à une certaine valeur par coupure d'un excédent. Généralement, on ne coupe pas l'appendice à moins de 0,2 mm de longueur. De préférence, on ne coupe pas cet appendice à moins de 5 mm de longueur.

Le procédé selon l'invention, en ce compris toutes ses variantes, convient bien pour réaliser un réservoir à carburant en matière plastique de structure polymérique multicouche.

L'invention concerne enfin un moule de compression-soufflage formé d'au moins deux parties distinctes comprenant à leur périphérie des trottoirs de soudage capables de pincer et souder des éléments distincts en matière plastique de structure polymérique multicouche, selon lequel les trottoirs de soudage de deux parties de moule se faisant vis-à-vis laissent subsister entre eux, lorsque le moule est fermé, un espace dont la hauteur de la section diminue vers l'extérieur de la cavité du moule et se prolonge par une fente mince et étendue destinée à comprimer fortement la matière plastique pendant la fermeture du moule.

Dans ce moule, les termes communs ont la même signification que celle donnée *supra* dans la description du corps creux.

## Revendications

1. Procédé pour la réalisation, selon la technique du moulage par compression, d'un corps creux en matière plastique de structure polymérique multicouche comprenant une couche barrière aux liquides et aux gaz par soudage d'au moins deux éléments, **caractérisé en ce que** :
a) on insère les éléments dans un moule ouvert en plusieurs parties,
b) on pince entre des trottoirs de soudage disposés à la périphérie d'au moins deux parties de moule au moins une partie des extrémités des éléments à assembler de manière à les superposer,
c) on presse les parties de moule les unes contre les autres afin de souder ensemble les éléments en fermant le moule et, dans le même temps,
d) on force l'écoulement d'au moins les couches barrière de la structure de ces éléments dans une fente mince et étendue délimitée par un espace séparant deux parties de moule au voisinage des trottoirs de soudage et dont la section se rétrécit du côté de l'extérieur de la cavité du moule,
e) on continue à presser les parties de moule, tout en laissant subsister entre les trottoirs de soudage des parties de moule se faisant vis-à-vis, un espace de manière à former un appendice qui émerge de la surface du corps creux du côté de l'extérieur de la cavité du moule,
f) on ouvre le moule,
g) on extrait du moule le corps creux ainsi réalisé.

2. Procédé selon la revendication 1, **caractérisé en ce que** :
a) le moule comprend au moins deux parties distinctes, chaque partie comprenant elle-même un trottoir de soudage, les trottoirs de soudage de chaque partie se faisant face et formant, entre les deux parties du moule lorsque celui-ci est fermé, un espace dont la hauteur de la section diminue vers l'extérieur de la cavité du moule et se prolonge par une fente mince et étendue;
b) à la dernière étape étape du procédé, on extrait du moule le corps creux qui comprend sur sa surface extérieure un ou plusieurs appendices.

3. Procédé selon l'une quelconque des revendications 1 ou 2, **caractérisé en ce qu'**on réalise en outre une mise en forme des éléments à l'intérieur du moule par injection dans celui-ci d'un fluide de soufflage, de manière à appliquer les éléments contre les parois du moule.

4. Procédé selon l'une quelconque des revendications 1 à 3, **caractérisé en ce que** les éléments sont soudés sur une partie du périmètre du corps creux.

5. Procédé selon l'une quelconque des revendications 1 à 4, **caractérisé en ce qu'**après ouverture du moule, on replie en outre l'appendice contre la surface extérieure du corps creux, à laquelle on le solidarise ensuite.

6. Procédé selon l'une quelconque des revendications 1 à 5 pour la réalisation d'un réservoir à carburant en matière plastique de structure polymérique multicouche.

7. Moule de compression-soufflage ayant une cavité et formé d'au moins deux parties distinctes comprenant chacune à leur périphérie un trottoir de soudage capable de pincer et souder des éléments distincts en matière plastique de structure polymérique multicouche, **caractérisé en ce que** les trottoirs de soudage de deux parties de moule se faisant vis-à-vis laissent subsister entre eux, lorsque le moule est fermé, un espace dont la hauteur de la section diminue vers l'extérieur da la cavité du moule et se prolonge par une fente mince et étendue destinée à comprimer la matière plastique de structure polymérique multicouche pendant la fermeture du moule.

## Patentansprüche

1. Druckformungsverfahren zur Herstellung eines Kunststoffhohlkörpers mit mehrlagiger Polymerstruktur mit einer Trennschicht für Flüssigkeiten und Gas durch Verschweißen zumindest zweier Elemente, **dadurch gekennzeichnet, daß** :
a) die Elemente in eine offene, aus mehreren Teilen bestehende Form eingebracht werden,
b) zwischen den Schweißbahnen am Umfang zumindest zweier Formteile zumindest ein Teil der Enden der zu verbindenden Elemente zusammengepreßt wird, um diese übereinander zu legen,
c) die Formteile gegeneinandergepreßt werden, um beim Schließen der Form die Anordnung aus Elementen zu verschweißen, und gleichzeitig
d) zumindest die Trennschichten der Struktur dieser Elemente in einen dünnen Schlitz gepreßt werden, der durch einen Raum begrenzt ist, welcher zwei Teile der Form in der Nähe der Schweißbahnen voneinander trennt und dessen Querschnitt sich gegen die Außenseite des Formhohlraumes verengt,
e) die Formteile weiter zusammengepreßt werden, während zwischen den einander gegenüberliegenden Schweißbahnen der Formteile ein Raum frei gelassen wird, um einen Ansatz zu bilden, der von der Oberfläche des Hohlkörpers auf der Außenseite des Formhohlraumes vorsteht,
f) die Form geöffnet wird,
g) der auf diese Weise gebildete Hohlkörper herausgenommen wird.

2. Verfahren nach Anspruch 1, **dadurch gekennzeichnet, daß** :
a) die Form zumindest zwei verschiedene Teile aufweist, wobei jeder Teil mit einer Schweißbahn versehen ist, wobei die Schweißbahnen der Teile einander gegenüberliegen und zwischen den beiden Formteilen, wenn die Form geschlossen ist, einen Raum bilden, dessen Querschnittshöhe gegen die Außenseite des Formhohlraumes abnimmt und der sich durch einen dünnen und langgestreckten Schlitz fortsetzt,
b) im letzten Abschnitt des Verfahrens der Hohlkörper aus der Form entnommen wird, wobei der Hohlkörper auf seiner Außenfläche einen oder mehrere Ansätze aufweist.

3. Verfahren nach Anspruch 1 oder 2, **dadurch gekennzeichnet, daß** außerdem im Inneren der Form Elemente gebildet werden, indem ein Blasfluid in das Innere eingespritzt wird, um die Elemente gegen die Formwände anzulegen.

4. Verfahren nach einem der Ansprüche 1 bis 3, **dadurch gekennzeichnet, daß** die Elemente auf einen Teil des Umfanges des Hohlkörpers geschweißt werden.

5. Verfahren nach einem der Ansprüche 1 bis 4, **dadurch gekennzeichnet, daß** nach dem Öffnen der Form der Ansatz gegen die Außenfläche des Hohlkörpers umgeschlagen wird, mit welcher es sodann verbunden wird.

6. Verfahren nach einem der Ansprüche 1 bis 5 zur Ausbildung eines Kraftstoffbehälters aus Kunststoff mit mehrlagiger Polymerstruktur.

7. Form für die Druckblasformung, mit einem Hohlraum und mit zumindest zwei verschiedenen Formteilen, von denen jeder an seinem Umfang eine Schweißbahn aufweist, die befähigt sind, verschiedene Elemente aus Kunststoff mit mehrlagiger Polymerstruktur zusammenzuquetschen und zu verschweißen, **dadurch gekennzeichnet, daß** die einander gegenüberliegenden Schweißbahnen der beiden Formteile im Schließzustand der Form zwischeneinander einen Raum belassen, dessen Querschnittshöhe gegen die Außenseite des Formhohlraumes abnimmt und der sich durch einen dünnen und langgestreckten Schlitz fortsetzt, der dazu bestimmt ist, die mehrlagige Polymerstruktur während des Schließens der Form zusammenzupressen.

## Claims

1. Process for manufacturing, using the compression-moulding technique, a hollow body made of plastic of multilayer polymeric structure comprising a barrier layer that is a barrier to liquids and to gases, by welding at least two elements together, **characterized in that** :
a) the elements are inserted in an open multi-part mould;
b) at least part of the ends of the elements which are to be assembled are gripped between the welding kerbs arranged at the periphery of at least two mould parts, so as to superpose them;
c) the mould parts are pressed together so as to weld the elements together by closing the mould, and, at the same time;
d) at least the barrier layers of the structure of these elements are forced to flow into a shallow broad slot delimited by a space separating two mould parts near the welding kerbs and the cross section of which narrows on the side facing the outside of the mould cavity;
e) the mould parts continue to be pressed together, while leaving, between the welding kerbs of the mould parts facing each other, a space so as to form an appendage which emerges from the surface of the hollow body on the outside of the mould cavity;
f) the mould is opened; and
g) the hollow body thus produced is extracted from the mould.

2. Process according to Claim 1, **characterized in that**:
a) the mould comprises at least two separate parts, each part itself comprising a welding kerb, the welding kerbs of each part facing each other and forming, between the two parts of the mould when the latter is closed, a space, the height of the cross section of which decreases towards the outside of the mould cavity and is extended by a shallow broad slot; and
b) in the final step of the method, the hollow body, which includes one or more appendages on its outer surface, is removed from the mould.

3. Process according to either one of Claims 1 and 2, **characterized in that** the elements are also shaped inside the mould by injecting a blowing fluid into the mould so as to press the elements against the walls of the mould.

4. Process according to any one of Claims 1 to 3, **characterized in that** the elements are welded to a portion of the perimeter of the hollow body.

5. Process according to any one of Claims 1 to 4, **characterized in that** after opening the mould, the appendage is also folded down against the outer surface of the hollow body, to which it is then secured.

6. Process according to any one of Claims 1 to 5, for producing a fuel tank made of plastic of multilayer polymeric structure.

7. Compression-blow-moulding mould having a cavity and formed of at least two distinct parts each comprising, at their periphery, a welding kerb capable of gripping and welding distinct elements made of plastic of multilayer polymeric structure, **characterized in that** the welding kerbs of two mould parts facing one another leave between them, when the mould is closed, a space the height of the cross section of which decreases towards the outside of the mould cavity and is extended by a shallow broad slot intended to greatly compress the plastic of multilayer structure while the mould is being closed.
